# EUROPEAN PATENT APPLICATION

(11) **EP 0 994 536 A1**
(43) Date of publication of application: **19.04.2000**
(21) Application number: 98308503.6
(22) Date of filing: 16.10.1998
(51) Int. Cl.: H01R 31/06

(54) **Voice-controlled electrical adapter**

(71) Applicant: Huang, Hsien-Ting, Nei-Hu Area, Taipei (TW)
(72) Inventor: Huang, Hsien-Ting, Nei-Hu Area, Taipei (TW)
(74) Representative: Needle, Jacqueline

(57) **Abstract**

A voice-controlled electrical adapter includes a plug adapted to engage for example a wall outlet to supply electrical power to the adapter and a socket adapted to receive the plug of an electrical appliance and a voice control circuit electrically connected between the plug and the socket to form a normally-open electrical loop therebetween. The voice control circuit includes a microprocessor based processing means having a memory to store therein a reference instruction, a microphone to receive and apply a user's instruction to the microprocessor which identifies the user's instruction by comparing the user's instruction with the reference instruction and operate in response thereto to control a switching circuit to selectively close the electrical loop to so as to allow the electrical power to be supplied from external power source to the electrical appliance. Visual and vocal output devices may be provided and controlled by the microprocessor to indicate the operation and status of the adapter. The microprocessor may be programmed to perform a learning mode which allows the user to input his or her voice as the reference instruction stored in the memory. If desired, more than one set of socket may be provided and arranged in parallel with each other for connection with more than one electrical appliance.

## Description

### FIELD OF THE INVENTION

The present invention relates generally to an adapter to be connected between for example a wall outlet and an home electrical appliance to provide an electrical connection therebetween and in particular to a voice-controlled adapter which allows users to turn on/off the electrical appliance by controlling the adapter with their voices or other specific sound signals.

### BACKGROUND OF THE INVENTION

Electrical appliances are usually powered by the electrical main by being plugged in for example a wall outlet. Switches are provided on the electrical appliances to conduct/cut off the power supplied from the wall outlet to the appliance. The switches may be simply a pushbutton or a rotatable knob that is operated by direct contact of the user's hand. Alternatively, remote control technique has also been developed to provide the general consumers with a more convenient and efficient way to turn on/off the electrical appliance. The remote control, however, is usually very sophisticated and has a small size that cause it to be randomly disposed at any location by the previous user, leading in inconvenience of the next user to look for the remote control.

Thus, voice- or sound-controlled switching device was developed, which automatically turn on/off the electrical appliance connected thereto by detecting a specific sound or voice. The operation is very simple, for example when the switching device detects for example a single clap, it operates to turn on the electrical appliance, such as a light, and two claps activate the switching device to turn off the electrical appliance. Incorrect operation of the switching device frequently occurs for other sound or noise that occurs around the switching device may mis-activate the switching device. For example, the sound caused by an article falling onto the ground may cause the switching device to turn on the electrical appliance. Therefore, it is desirable to provide a voice-controlled switching device which may not be mis-activated to operate undesirably.

### SUMMARY OF THE INVENTION

Therefor, a primary object of the present invention is to provide a voice-controlled electrical switching device which may not be mis-activated to operate undesirably or the mis-activation is significantly reduced so that a more effective voice-controlled switching device is provided for controlling electrical appliances.

Another object of the present invention is to provide an electrical adapter which incorporates therein the voice-controlled switching device for more effectively controlling the electrical appliance that is connected to the electrical main via the adapter.

A further object of the present invention is to provide a voice-controlled electrical adapter which operates based on instruction of users' voice so as to provide a convenient and effective user's control over the electrical appliance connected to the electrical main via the adapter.

A further object of the present invention is to provide a voice-controlled electrical adapter which receives and stores specific voices from the users as reference signals for comparison with future instruction of operation of the adapter so that mis-activation caused by noise sound may be reduced or even eliminated.

A further object of the present invention is to provide a voice-controlled electrical adapter which connects a plurality of electrical appliances to the electrical main and allows the electrical appliances to be controlled by different voices or sounds so that each of the appliances may only be turned on/off by a specific, associated vocal signal and mis-activation of the appliances is reduced.

In accordance with the present invention, there is provided a voice-controlled electrical adapter comprising a plug adapted to engage for example a wall outlet to supply electrical power to the adapter and a socket adapted to receive the plug of an electrical appliance and a voice control circuit electrically connected between the plug and the socket to form a normally-open electrical loop therebetween. The voice control circuit comprises a microprocessor based processing means having a memory to store therein a reference instruction, a microphone to receive and apply a user's instruction to the microprocessor which identifies the user's instruction by comparing the user's instruction with the reference instruction and operate in response thereto to control a switching circuit to selectively close the electrical loop to so as to allow the electrical power to be supplied from external power source to the electrical appliance. Visual and vocal output devices may be provided and controlled by the microprocessor to indicate the operation and status of the adapter. The microprocessor may be programmed to perform a learning mode which allows the user to input his or her voice as the reference instruction stored in the memory. If desired, more than one set of socket may be provided and arranged in parallel with each other for connection with more than one electrical appliance.

### BRIEF DESCRIPTION OF THE DRAWINGS

The resent invention will be better understood from the following description of a preferred embodiment thereof, with reference to the attached drawings, wherein:
Fig. 1 is perspective view showing a voice-controlled electrical adapter constructed in accordance with the present invention; and
Fig. 2 a circuit diagram shows the voice control circuit of the voice-controlled electrical adapter in accordance with the present invention.

### DETAILED DESCRIPTION OF THE PREFERRED EMBODIMENT

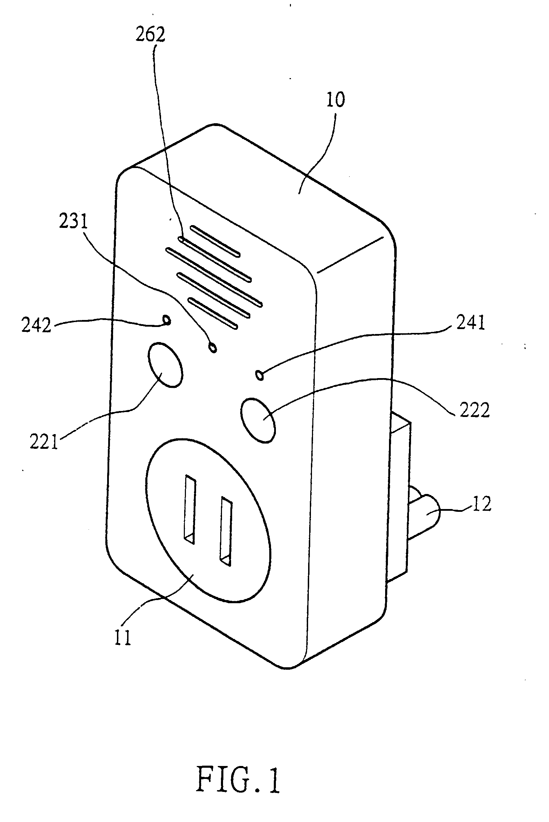

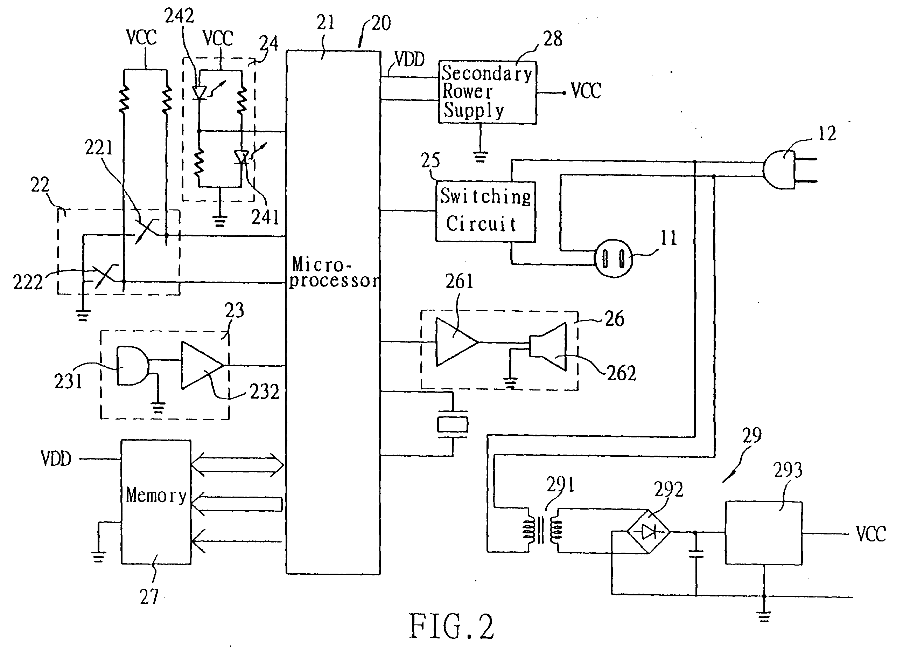

With reference to the drawings and in particular to Fig. 1, wherein a voice-controlled electrical adapter constructed in accordance with the present invention, generally designated with reference numeral 10, is shown, the electrical adapter 10 of the present invention comprises a casing inside which a voice control circuit 20 as particularly shown in Fig. 2 is housed. A plug portion 12 which may comprise two blades (as shown in Fig. 2) or more blades to serve as a power input portion of the adapter 10 is provided on the casing to be plugged into an external power source, such as a wall outlet (not shown) to connect the voice control circuit 20 to the wall outlet. A socket portion 11 comprises at least one set of plug receiving holes (which may comprise two or three holes) engageable with blades of the plug of an electrical appliance (not shown) is formed on the casing of the adapter 10 to serve as a power output portion which supplies power to the electrical appliance. Thus, an electrical loop which in accordance with the present invention is normally open is formed between the wall outlet and the electrical appliance and the electrical adapter 10 of the present invention provides an electrical connection therebetween.

If desired, there may be more than one set of receiving holes formed on the socket portion 11 of the electrical adapter 10, arranged to be in parallel with each other so that the electrical adapter 10 may be used to connect more than one electrical appliance to the wall outlet.

With reference to Fig. 2, the voice control circuit 20 in accordance with the present invention will be described. The voice control circuit 20 is a microprocessor based processing device, comprising a microprocessor 21 to which a switching circuit 25 is connected. The switching circuit 25 is connected between and forms a normally-open electrical loop between the plug portion 12 which is connected to the external power supply (not shown) and the socket portion 11 to which the electrical appliance (not shown) is connected so that the switching circuit 25 is controlled by the microprocessor 21 to selectively close the electrical loop which allows electricity to be applied from the plug portion 12 to the socket portion 11 and thus the electrical appliance and open the electrical loop which cuts off the power supply from the plug portion 12 to the socket portion 11 and thus the electrical appliance.

The switching circuit 25 may comprise any switching elements that are known to the art, such as relay, CMOS, transistor that is directly controlled by the microprocessor 21 to open/close the electrical loop. The switching circuit 25 is in general known so that no further detail is needed herein.

It should be noted that there may be more than one switching circuit associated with more then one set of receiving holes of the socket portion 11 so that each set of the receiving hole is independently controlled by the respect switching circuit. Alternatively, the switching circuit 25 may comprises a plurality of switching elements respectively associated with the more than one set of the receiving holes of the socket portion 11.

In accordance with the present invention, the microprocessor 21 is operable based on a voice instruction given by a user. To apply the voice instruction to the microprocessor 21, the voice control circuit 20 comprises a voice input circuit 23 which is electrically connected to the microprocessor 21 to receive and apply the user's voice instruction or any predetermined vocal signal to the microprocessor 21 whereby the microprocessor 21, in response thereto, controls the switching circuit 25 to open/close the electrical loop between the plug portion 12 and the socket portion 11.

The voice input circuit 23 may comprise a microphone 231 or the like which receives a vocal input signal and provides an electrical output signal. The electrical output signal is amplified by an amplifier 232 in order to provide a desired level to be applied to the microprocessor 21.

In accordance with the present invention, the voice control circuit 20 comprises a memory 27 which is coupled to and accessible (read/write) by the microprocessor 21. The memory 27 stores reference instructions therein, including at least instructions for closing and opening the electrical loop between the plug portion 12 and the socket potion 11. In operation, the user applies a voice instruction to the microprocessor 21 via the voice input circuit 23 and the microprocessor 21 compares the user's voice instruction with the reference instructions stored in the memory 27 and determines if the user's voice instruction matches any one of the reference instructions and performs the user's voice instruction. If no match is found, the microprocessor 21 simply ignores the signal received by the voice input circuit 23.

The memory 27 may comprise any suitable memory means, such as electronic memory including random access memory (RAM) and electrically erasable programmable read only memory (EEPROM).

To allow the user to establish personal voice instruction in the memory 27, the microprocessor 21 may be programmed to perform a learning mode. To allow the user to control the microprocessor 21 to enter the learning mode, a user pushbutton circuit 22 is provided, comprising at least a memory clear pushbutton 221 which after having been depressed for a predetermined period, such as 2 seconds, clears the contents of the memory 27 via the microprocessor 21 and a learning pushbutton 222 which when actuated, signal the microprocessor 21 to enter the learning mode in which the microprocessor 21 analyzes the user's voice that is received via the voice input circuit 23 so as to establish the user's personal voice instruction based on the vocal signal given by the user in the learning mode. The user's personal voice instruction is then stored in the memory 27 to serve as the reference instruction. The reference voice instruction that was previously stored in the memory 27 may be cleared or erased by means of the memory clear pushbutton 221.

In case that there are more than one set of receiving holes formed on the socket portion 11 to which more than one electrical appliance may be connected, then the microprocessor 21 may be programmed to learn a particular reference instruction with respect to each of the receiving hole sets so that each of the electrical appliances connected to the adapter 10 may be controlled independently.

Preferably, the voice control circuit 20 comprises a voice output circuit 26 which is coupled to and controlled by the microprocessor 21 in such a way that when the microprocessor 21 receives and confirms the user's voice instruction (by comparing with the reference instruction stored in the memory 27), the microprocessor 21 drives the voice output circuit 26 to generate a vocal signal to vocally confirm the performing of the user's instruction. The voice output circuit 26 is also useful in the learning mode, wherein when the microprocessor 21 receives and analyzes the user's voice instruction in the learning mode, the microprocessor 21 also drives the voice output circuit 26 to generate a signal indicating if the user's voice instruction is recognized and accepted and the learning is successful. This is because in the learning process, there may be for example noise or other interference making the microprocessor 21 incapable to recognize the user's instruction and in such a case, the microprocessor 21 may inform the user of the failure of learning. The user may repeat the learning process again until the user's instruction has been successfully recognized by the microprocessor 21.

The voice output circuit 26 may comprise an amplifier 261 which receives and amplifies electrical signal from the microprocessor 21 to a desired level and the amplified signal is then applied to a loud speaker 262 to be converted into a vocal signal thereby.

The voice control circuit 20 comprises a primary power supply circuit 29 which comprises a transformer 291 of which the primary side is coupled to the plug portion 12 for receiving external power supply and the secondary side that provides an output voltage is coupled to a rectifier 292 and a regulation circuit 293 to have the output voltage which is in general alternate current signal rectified and regulated so as to supply a direct current signal of desired voltage level to the microprocessor 32.

Preferably, a secondary power supply 28 is provided between the primary power supply 29 and the microprocessor 28. The secondary power supply 28 comprises a power storage means, such as a secondary cell or a capacitor that preserves certain amount of the power supplied from the primary power supply 29. This is of particular interest in case that the memory 27 comprises random access memory or other volatile storage for the secondary power supply 28 may supply power to maintains the memory 27 when the external power supplied to the primary power supply circuit 29 is cut off

Preferably, an indication circuit 24 is provided and connected to the microprocessor 21. The indication circuit 24 may comprise at least a power supply indicator 241 which indicates if the external power supply is active and an appliance ON indicator 242 which indicates if the switching circuit 25 is turned on and power is supplied to the appliance connected to the adapter 10.

In a preferred operation mode of the present invention, the adapter 10 has to learn first in order to be capable to recognize the user's instruction. In this case, the user plugs the adapter 10 into for example a wall outlet (not shown) and the power supply indicator 241 is lit. The user then actuates the learning pushbutton 222 of the user pushbutton circuit 22 to start the learning mode and speaks out a user's instruction, which may be a word or a short sentence such as "light on" toward the microphone 231 of the voice input circuit 23. The microprocessor 21 receives and analyzes the user's instruction and then generate a signal through the voice output circuit 26 to recognition and acceptance of the user's instruction. The user's instruction is then stored in the memory as the reference instruction. The process may be repeated to input different instructions. Once all the desired instructions have been input, the user actuates the learning pushbutton 222 again which terminates the learning mode. It should be noted that the user's instructions that are input to the microprocessor 21 may be from different users so that different users may operate the same or different electrical appliance through the adapter 10.

Once the learning mode has been completed, the user may plug the desired electrical appliance to the socket portion 11 of the adapter 10 and gives the user's instruction (such as "light on"), then the adapter 10 closes the electrical loop between the plug portion 12 and the socket portion 11 to supply the power to the electrical appliance. At the same time, the microprocessor 21 drives the voice output circuit 26 to give vocal signal that confirms the power is on, meanwhile, the microprocessor 21 also turns on the appliance ON indicator 242.

It should be noted that the appliance to be controlled by the adapter 10 may be connected to the adapter 10 first and then the learning mode is performed. The sequence of these events may not be significant if the microprocessor is properly programmed and this is known to those skilled in the art.

In turning off the appliance, the process is substantially the same. The microprocessor 21 receives the turn-off instruction via the voice input circuit 23 and compares and confirms the instruction and then opens the electrical loop between the plug portion 12 and the socket portion 11 so as to cut off the power supplied to the appliance to turn off the appliance. At the same time, the voice output circuit 26 may generate a vocal signal to confirm to the user the instruction and operation and the appliance ON indicator 242 is turned off.

Although the preferred embodiment has been described to illustrate the present invention, it is apparent that changes and modifications in the specifically described embodiment can be carried out without departing from the scope of the present invention. For example, the plug portion 12 of the adapter 10 may be modified to comprises conductors to be directly and non-removably secured to the electrical wires of the electrical main, by means of for example soldering, so that the adapter 10 may serve as a socket for a wall outlet. Such modifications and changes should be consider completely within the scope of the present invention which is intended to be limited only by the appended claims.

## Claims

1. A voice-controlled electrical adapter comprising a power input portion adapted to be electrically engageable with an external power source which supplies electrical power to the adapter and a power output portion adapted to be electrically engageable with at least one electrical appliance and a voice control circuit electrically connected between the power input portion and the power output portion to form a normally-open electrical loop therebetween, the voice control circuit comprising processing means having a reference instruction contained therein, voice input means coupled to the processing means and adapted to receive and apply a vocal signal from a user to the processing means which identifies the vocal signal received from the user by comparing the vocal signal with the reference instruction contained in the processing means for controlling switching means coupled to the processing means to selectively close the electrical loop so as to allow the electrical power to be supplied from the external power source to the electrical appliance.

2. The electrical adapter as claimed in Claim **1**, wherein the voice input means comprises a microphone adapted to receive the vocal signal from the user and converts the vocal signal into an electrical signal to be applied to the processing circuit.

3. The electrical adapter as claimed in Claim **1**, wherein the voice control circuit comprises indication means comprising a first indicator to indicate the supply of the external power source and a second indicator to indicate the electrical loop is closed.

4. The electrical adapter as claimed in Claim **1**, wherein the processing circuit comprises a memory which stores the reference instruction and wherein the processing circuit comprises a microprocessor which is programmed to perform a learning mode in which a first vocal signal is received and recognized by the microprocessor via the voice input means and stored in the memory as the reference instruction.

5. The electrical adapter as claimed in Claim **4**, wherein the voice control circuit comprises a voice output means which is coupled to and controlled by the processing circuit to generate a voice output signal and wherein the microprocessor drives the voice output means to generate a signal indicating the recognition of the first vocal signal.

6. The electrical adapter as claimed in Claim **5**, wherein the voice output means comprises a speaker which receives electrical signal from the processing means and generate the voice output signal.

7. The electrical adapter as claimed in Claim **1**, wherein the voice control circuit comprises a voice output means which is coupled to and controlled by the processing circuit to generate a vocal output.

8. The electrical adapter as claimed in Claim **7**, wherein the vocal output from the voice output means is generated when the electrical loop is closed.

9. The electrical adapter as claimed in Claim **7**, wherein the voice output means comprises a speaker which receives an electrical signal from the processing means and generates the vocal output.

10. The electrical adapter as claimed in Claim **4**, wherein the memory comprises erasable memory and wherein the control circuit comprises a user pushbutton circuit coupled to the processing circuit which comprises a first user-accessible pushbutton which is user-actuateable to erase the memory and a second user-accessible pushbutton which is user actuateable to signal the microprocessor to enter the learning mode.

11. The electrical adapter as claimed in Claim **1**, wherein the voice control circuit comprises a primary power supply which has an input electrically coupled to the power input portion of the adapter and an output electrically connected to the processing circuit to supply power thereto.

12. The electrical adapter as claimed in Claim **11**, wherein the voice control circuit further comprises power storage means connected between the primary power supply and the processing circuit which preserves a portion of the power supplied from the primary power supply to hold the memory when the primary power supply is turned off.

13. The electrical adapter as claimed in Claim **1**, wherein the power input portion comprises a plug adapted to be removably engageable with an external power source.

14. The electrical adapter as claimed in Claim **1**, wherein the power input portion comprises conductors directly secured to an external power source.

15. The electrical adapter as claimed in Claim **1**, wherein the power output portion comprises at least one set of receiving holes adapted to be engageable by at least one electrical appliance.
